# EUROPEAN PATENT APPLICATION

(11) **EP 2 557 532 A1**
(43) Date of publication of application: **13.02.2013**
(21) Application number: 12179683.3
(22) Date of filing: 08.08.2012
(51) Int. Cl.: G06Q 20/32

(54) **Methods and apparatus to provision payment services**

(30) Priority: 09.08.2011 US 201161521643 P
(71) Applicant: Research In Motion Limited, Waterloo, ON N2L 3W8 (CA)
(72) Inventor: Singh, Ravi, Mississauga, Ontario L4W 0B5 (CA); Adams, Neil Patrick, Waterloo, Ontario N2L 3W8 (CA); Marcovecchio, Vincenzo Kazimierz, Kanata, Ontario K2K 3K1 (CA)
(74) Representative: Greenaway, Martin William

(57) **Abstract**

Methods and apparatus to provision payment services are disclosed. An example method includes receiving an indication of a service to be provisioned to a mobile device, generating a token indicative of the service, wherein the token includes a cryptographically signed portion that was cryptographically signed by a secure element of the mobile device, sending the token to an entity for verification, and provisioning the service when the token is verified.

## Description

This patent claims priority from U.S. Provisional Patent Application Serial No. 61/521,643, filed August 9, 2011, the entirety of which is hereby incorporated by reference.

### FIELD OF THE DISCLOSURE

The present disclosure relates generally to communications and, more particularly, to methods and apparatus to provision payment services.

### BRIEF DESCRIPTION OF THE DRAWINGS

FIG. 1 depicts an example system for provisioning payment services to a mobile device.

FIG. 2 depicts additional detail of one implementation of the token generator of FIG. 1

FIG. 3 depicts additional detail of one implementation of the token validator of FIG. 1.

FIG. 4 depicts example communications and processing representative of a process to provision payment services in accordance with a first example.

FIG. 5 depicts an example flow diagram representative of a process, which may be implemented using computer readable instructions on a mobile device, which may be used to generate a token.

FIG. 6 depicts an example flow diagram representative of a process, which may be implemented using computer readable instructions on a server, which may be used to assess token validity.

FIG. 7 depicts example communications and processing representative of a process to provision payment services in accordance with a second example.

FIG. 8 depicts an example flow diagram representative of a process, which may be implemented using computer readable instructions on a mobile device, which may be used to generate an alternate token.

FIG. 9 depicts an example flow diagram representable process, which may be implemented using computer readable instructions at a service provider to generate a token.

FIG. 10 depicts example communications and processes representative of a process to provision payment services in accordance with a third example.

FIG. 11 is a block diagram of a mobile device in accordance with the disclosure.

FIG. 12 is a block diagram of a computer system which may be used to implement the service provider and/or the trusted service manager of FIG. 1.

### DETAILED DESCRIPTION

Although the following discloses example methods, apparatus, and articles of manufacture including, among other components, software executed on hardware, it should be noted that such methods, apparatus, and articles of manufacture are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods, apparatus, and articles of manufacture, persons having ordinary skill in the art will readily appreciate that the examples provided are not the only way to implement such methods, apparatus, and articles of manufacture.

For simplicity and clarity of illustration, where considered appropriate, reference numerals may be repeated among the figures to indicate corresponding or analogous elements. In addition, numerous specific details are set forth in order to provide a thorough understanding of examples disclosed herein. However, it will be understood by those of ordinary skill in the art that examples disclosed herein may be practiced without these specific details. In other instances, well-known methods, procedures, and components have not been described in detail so as not to obscure examples disclosed herein. Also, the description is not to be considered as limiting the scope of examples disclosed herein.

Example methods, apparatus, and articles of manufacture disclosed herein may be used in connection with mobile devices, which may be any mobile communication device, mobile computing device, or any other element, entity, device, or service capable of communicating wirelessly. Mobile devices, also referred to as terminals, wireless terminals, mobile stations, communication stations, user equipment (UE), or user devices, may include mobile smart phones (e.g., BlackBerry® smart phones), cellular telephones, wireless personal digital assistants (PDA), tablet/laptop/notebook/netbook computers with wireless adapters, etc.

Example methods, apparatus, and articles of manufacture disclosed herein facilitate operations in a mobile device and/or associated servers. In some examples, a method includes receiving an indication of a service to be provisioned to a mobile device; generating a token indicative of the service, wherein the token includes an cryptographically signed portion that was cryptographically signed by a secure element of the mobile device; sending the token to an entity for verification; and provisioning the service when the token is verified. The service may be a payment service.

In some examples, the token includes information used to construct the cryptographically signed portion and the information used to construct the cryptographically signed portion includes an identification of the service to be provisioned to the mobile device. The information used to construct the cryptographically signed portion may include a mobile device identifier or a timestamp. In some examples, generating the token comprises constructing the cryptographically signed portion using a unique key assigned to the mobile device. The unique key may be assigned to the mobile device by a trusted service manager and the verification is performed by the trusted service manager.

In some examples, sending the token comprises sending the token from the mobile device directly to the service provider. While in other examples, sending the token comprises sending the token from the mobile device to the service provider via a personal computer.

Receiving the indication may include obtaining a scan of a graphic, an image, etc. from a display screen, from media (e.g., printed media), etc. The image may include a two-dimensional barcode. In some examples, receiving the indication includes near field communication.

Some example methods include obtaining a token indicative of a service to be provisioned to a mobile device, the token including a cryptographically signed portion that was cryptographically signed by a secure element of the mobile device, obtaining a secure element key corresponding to the secure element of the mobile device, processing at least a portion of the token using the secure element key to verify validity of the token, and transmitting an indication that the service is to be provisioned to the mobile device. Some example methods further include assigning the secure element key to the mobile device and providing the secure element key to the secure element prior to obtaining the token.

In some examples, the method includes instructing the mobile device to execute one or more commands to provision the service to the mobile device. Some example methods include receiving a request to validate a token from a provider of the service. The service may be a payment service.

In some example methods, processing the at least a portion of the token includes processing non-encrypted information in the token in combination with the secure element key to obtain a cryptographic signature. In some examples, processing the at least a portion of the token includes comparing the cryptographic signature to the cryptographically signed portion of the token. Transmitting the indication may include transmitting the indication to a provider of the service.

In some examples, a device includes a processor, a secure element, and a memory coupled to the processor and storing instructions. The example instructions, when executed by the processor, cause the processor to generate a token indicative of a service to be provisioned to a mobile device, wherein the token includes a cryptographically signed portion that was cryptographically signed by the secure element, send the token to an entity for verification, and provision the service when the token is verified.

In some example devices, the secure element is to store a secure element key and to construct the cryptographically signed portion using the secure element key. The secure element may receive the secure element key prior to generating the token. In some examples, the device further includes a virtual wallet to store a plug-in corresponding to the service. The secure element may construct the cryptographically signed portion using an identification of the service to be provisioned to the mobile device, using a mobile device identifier, using a timestamp, etc. In some examples, the token further includes an identification of the service to be provisioned to the mobile device, a mobile device identifier, and a timestamp.

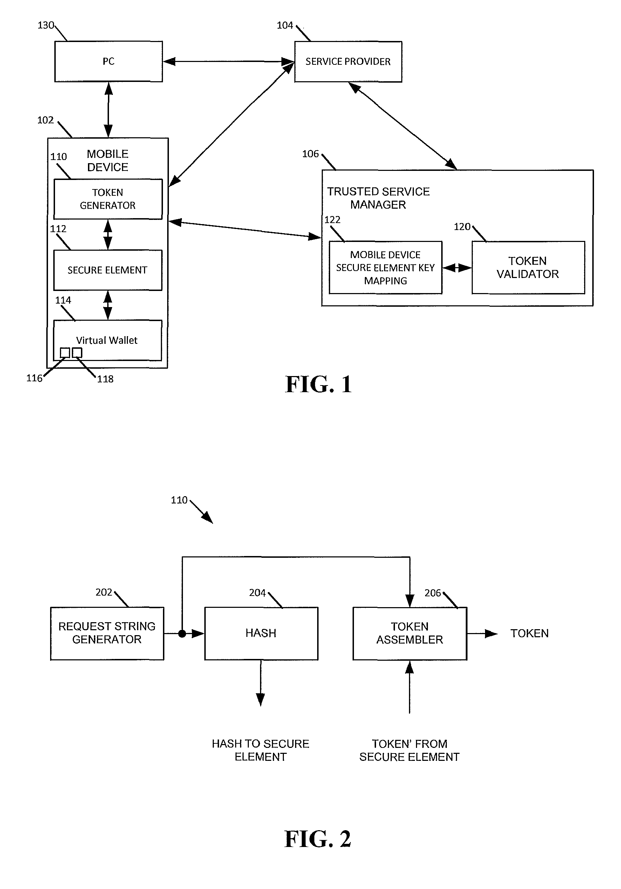

As shown in the example of FIG. 1, a user of a mobile device 102 desires to provision payment service from a service provider 104 (e.g., a bank or a credit card company) to the mobile device 102. The payment service may be associated with a credit card and the provisioning of the payment service to the mobile device 102 makes the credit card available in a virtual wallet on the mobile device 102. A trusted service manager 106 may be provided to facilitate security during the provisioning of the payment service. For example, the mobile device 102 may contact the service provider 104 to express interest in provisioning a service such as a credit card or debit card to the mobile device 102, such that the mobile device 102 may be used to conduct cashless transactions using, for example, near field communication (NFC), or any other suitable technology.

To facilitate provisioning the payment service from the service provider 104 to the mobile device 102, the mobile device includes a token generator 110 and a secure element 112. The mobile device 102 further includes a virtual wallet 114 in which one or more plug-ins 116, 118 may be installed. The plug-ins 116, 118 may correspond to provisioned payment services, etc. In practice, the mobile device 102 may be implemented by a mobile telephone, a smart phone, a tablet computer, or any suitable device. The token generator 110, the secure element 112, and the virtual wallet 114 may be implemented using hardware, software, firmware, coding, or any other suitable logic to facilitate the functionality described herein.

Although not pictured in FIG. 1 for the sake of clarity, the mobile device 102 may include other functionality, such as wireless communication functionality, etc. The mobile device 102 is configured to communicate with the service provider 104 and the trusted service manager 106 using suitable networks (e.g., cellular networks, local area networks, etc.).

The service provider 104 may be implemented using a server or any other suitable computing device. In one example, the service provider 104 may include a front end and a back end. In accordance with such an example, the front end may provide a website interface to which a browser of the mobile device 102 or other devices/software may interface. The back end may provide communication functionality to facilitate communications with the trusted service manager 106.

To facilitate verification used when provisioning the payment service, the trusted service manager 106 includes a token validator 120 and a mobile device secure element key mapping 122. In practice, the trusted service manager 106 may be implemented using a server or any other suitable computing device including hardware and capable of executing software. As such, the token validator 120 and the mobile device secure element key mapping 122 may be implemented using hardware, software, firmware, coding, or any other suitable logic to facilitate the functionality described herein. Although not pictured in FIG. 1 for the sake of clarity, the trusted service manager 106 may include other functionality, such as wireless communication functionality, etc.

Also shown in FIG. 1 is a personal computer 130, which may interface with the service provider 104 via the website interface and/or may interface to the mobile device 102. As described below, the personal computer 130 and the mobile device 102 may cooperate or interoperate to provision the payment service to the mobile device 102.

The token generator 110 of the mobile device 102 interacts with a secure element 112 to generate a token that is used to ensure that the mobile device to which the payment service is being provisioned is the mobile device that requested such provisioning. The token created by the token generator 110 indicates to the trusted service manager 106 and the service provider 104 that the request was made from the mobile device 102. The token generator 110 may generate a token indicative of the service (e.g., the payment service from the service provider 104) and may include a portion that was cryptographically signed by the secure element 112. For example, as described below, the token may be generated using a unique key (e.g., a secure element key associated with a secure element ID) that was previously loaded into the secure element 112 of the mobile device 102 by the trusted service manager 106. Accordingly, the trusted service manager 106 is able to verify that the token was generated using the secure element 112 of the mobile device 102 and, thus, that the mobile device 102 requested provision of the service.

The token may be generated in several different ways: through the use of a browser on the mobile device 102, through the use of a web browser on PC 130 in combination with the mobile device 102, through the use of the code displayed on a web browser on the PC 130, and/or through the use of information entered on a web browser of the PC 130 and subsequently mailed to the user of the mobile device 102.

In one example, the provisioning of the payment service may be done through a browser of mobile device 102. In this example, once the mobile device 102 is redirected to the service provider 104, the token will be generated and posted to the service provider 104 by the mobile device 102. For example, the mobile device 102 may interact with a website hosted by the service provider 104.

In another example, the user of the mobile device 102 may visit a website hosted by the service provider 104 using the PC 130. According to this example, the user would use the mobile device 102 to generate an authentication token and would specify the service to be provisioned to the mobile device 102. Authentication information, such as a token and/or a personal identification number (PIN), would be displayed to the user on the mobile device 102. The user would then enter the authentication information into the website via the PC 130.

In another example, once a user has provided information to the service provider 104 via the PC 130 and a website hosted by the service provider 104, the service provider 104 temporarily holds information and assigns it a unique ID. The service provider 104 may then display a graphic including the information to the user on the PC 130, or may mail media including a graphic including the information to the user. In one example, the code may be a QR code, which includes one or more pieces of information (e.g., a secure element ID and the unique ID). The user of the mobile device 102 may then control the mobile device 102 to scan the graphic that is presented on the PC 130 to obtain information to continue with the provisioning process.

According to another example, the user may provide information to the service provider 104 via the PC 130 and a website hosted by the service provider 104 and the service provider 104 may then write the information into an NFC tag that is mailed to the user. Subsequently, the user may control the mobile device 102 to scan the NFC tag to continue with the provisioning process.

As described in further detail below, the token validator 120 of the trusted service manager 106 directly or indirectly receives the token generated by the mobile device 102 and validates the token. In some examples, the token validation may be carried out by the token validator 120 mapping the mobile device (e.g., the mobile device 102) to a secure element key stored in the mobile device secure element key mapping 122. The secure element key may then be used by the token validator 120 to process the token generated by the mobile device 102 and to assess the validity thereof.

In accordance with some of the examples described herein, the possibility of allowing a first user to sign up a second user for payment provisioning when the second user did not request the provisioning is avoided. Additionally, some of the examples described herein avoided the possibility of having a payment service inadvertently provisioned to the incorrect device (e.g., an accidental error in the provisioning process). Thus, the methods, systems, and processes described herein facilitate enhanced security when provisioning payment services.

Detail regarding one example implementation of the token generator 110 of the mobile device 102 shown in FIG. 2. As shown in FIG. 2, the token generator 110 includes a request string generator 202, a hash function 204, and a token assembler 206. The request string generator 202 gathers information within the mobile device 102 that is used to generate the token. In one example, the request string generator may gather information to generate a request as follows: version=1; source=handheld; PIN=<device PIN>; timestamp=<UTC Time>; serviceid=<serviceId>.

In the above example request, version indicates a version of the system making the request. The inclusion of the version field allows for future expansion of the system and ensures backward compatibility of legacy systems.

The source field indicates that the request for provisioning of the payment service is being made using a mobile device (e.g., a handheld), but does not particularly identify the mobile device 102. As shown in the examples below, when the PC 130 is involved in making the request for the provisioning of payment services, the source field may be changed to indicate that the source is the PC 130, or desktop.

The PIN field is an identifier indicative of the mobile device making the request. For example, the PIN provided in the request may identify the mobile device 102. In one example, the PIN may be an eight character reference that is assigned uniquely to each mobile device.

The timestamp field indicates the time at which the mobile device 102 generated the token. While Universal coordinated Time (UTC) may be used to populate the timestamp field, other indications of time may be used.

The service ID field indicates that the token generated by the mobile device 102 corresponds to a particular service that is to be provisioned to the mobile device 102. Each service that may be provisioned may have a unique service ID. For example, a Visa card from Bank A may have a service ID of 86, whereas a Visa card from Bank B may have a service ID of 88. As a further example, a MasterCard from Bank A may have yet a different service ID of 97. Of course, the foregoing service ID fields are merely examples and service IDs of different lengths may be used and the service IDs may be assigned in a predetermined manner that is agreed upon by the service provider 104 and the other service providers.

The request string is passed to the hash function 204, which may hash the request string in accordance with a cryptographic hash function. In one example, the hash function may be an SHA-512 hash function.

The hashed request string developed by the hash function 204 passes to the secure element 112, which cryptographically signs the hashed request string and returns token'. The cryptographic signing function may be an HMAC-SHA512 function, which could use one or more cryptographic keys that were previously stored in the secure element and that is known by the Trusted Service Manager 106.

The token assembler 206 receives the original request string from the request string generator 202, as well as token' from the secure element 112 and generates the token. In accordance with one example, the token may be as follows: version=1; source=handheld; pin=<device PIN>; timestamp=<UTC>; serviceid=<serviceId>; token'=<token'>. The fields of the token that were described are not described again, except to note that PIN, timestamp, service ID, and token may all be represented using hexadecimal numbers in string format (e.g., 0x1234568).

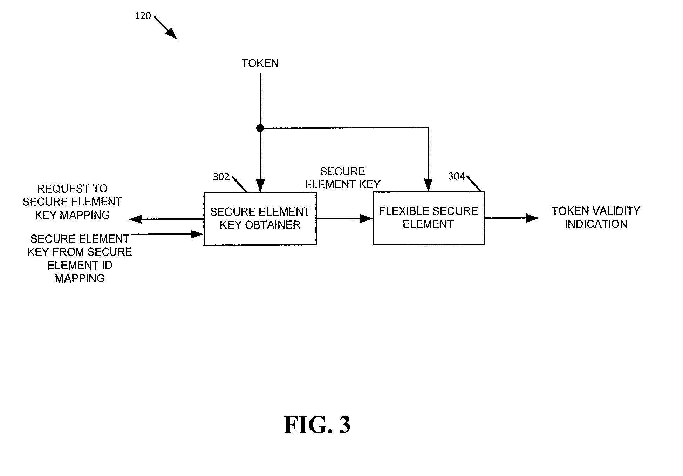

As explained above, the token includes a mix of information that is cryptographically signed and that is not cryptographically signed. Thus, the token validator 120, further detail which is shown in FIG. 3, can process the token to determine token validity by comparing the results of a token generation procedure involving information that is not cryptographically signed with the token that is cryptographically signed. As shown in FIG. 3 the token validator 120 includes a secure element key obtainer 302 and a flexible secure element 304. The secure element key obtainer 302 receives the token and requests the secure element key associated with the mobile device that created the token. For example, the secure element key obtainer 302 may make a request to the mobile secure element key mapping 122 using the PIN provided as part of the token. Based on the PIN, the mobile secure element key mapping 122 returns the secure element key associated with the PIN. The secure element key is passed to the flexible secure element 304, which uses the secure element key along with information provided in the token in an attempt to duplicate the token'. If the duplicated token' matches the token' provided in the token, then a token validity indication is issued that the token is valid. Conversely, if the duplicated token' does not match the token', then the indication that the token is not valid is issued. Thus, in this matter, the trusted service manager 106 may authenticate the validity of any token received to ensure that the token received was actually generated by a mobile device 102 seeking provision of payment services.

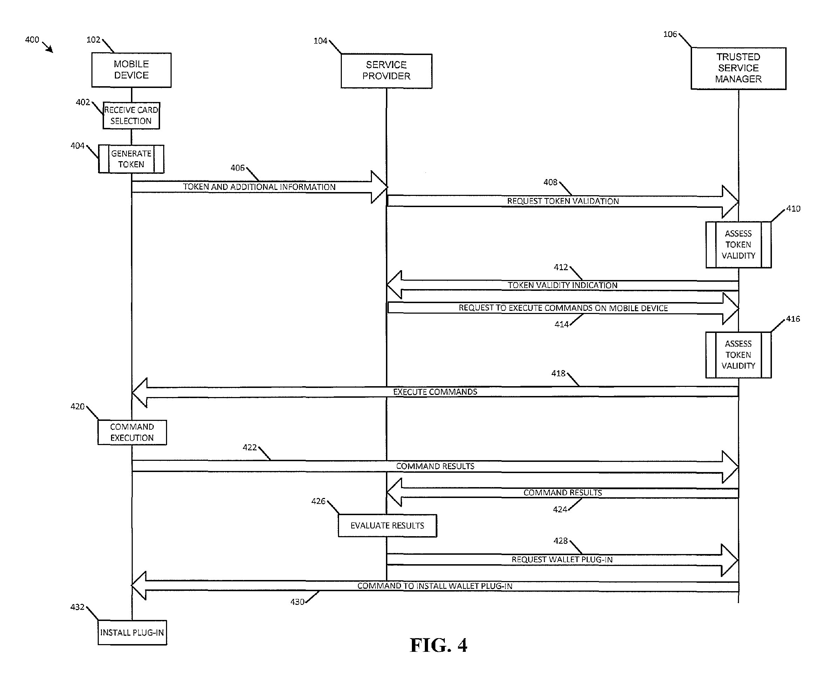

Turning now to FIG. 4, an example process 400 includes communications and processing to provision payment services. The mobile device 102 receives a card selection from a user interacting with the mobile device 102 (block 402). The card selection may be made when a browser of the mobile device 102 interacts with the service provider 104, or a listing of available card selections may be previously provided to the mobile device 102. After the card selection is received (block 402), the mobile device 102 generates a token (block 404) and sends the token and any additional information to the service provider 104 (block 406). The service provider 104 requests token validation from the trusted service manager 106 (block 408).

The trusted service manager 106 assesses token validity (block 410) and sends an indication of token validity to the service provider 104 (block 412). If the token is indicated to be valid, the service provider 104 may request the trusted service manager 106 to execute commands on the mobile device 102 (block 414).

In response to the request (block 414), the trusted service manager 106 again assesses token validity (block 416) and, if the token is valid, executes commands on the mobile device 102 (block 418). As shown in FIG. 4, the trusted service manager 106 may repeatedly assess token validity to ensure that all commands and requests being issued related to the mobile device 102 are actually intended to affect, or are made by, the mobile device 102. Accordingly, while assessment of token validity is shown in two instances in FIG. 4, this is merely one example of how frequently token validity may be assessed. Alternatively, one validity assessment may be carried out and that assessment may be relied upon for the duration of the provisioning process.

In response to the command from the trusted service manager 106, the mobile device 102 executes commands (block 420) and sends command results to the trusted service manager 106 (block 422). The trusted service manager 106 forwards the command results to the service provider 104 (block 424). Alternatively, the mobile device 102 may send command results to the service provider 104 without sending the command results to the trusted service manager 106. The service provider 104 evaluates the results (block 426) and, if the results are favorable, makes a request to the trusted service manager 106 to request a wallet plug-in (block 428). The trusted service manager 106 issues a command to install the wallet plug-in to the mobile device 102 (block 430) and the mobile device installs the plug-in (block 432). At this point, the service has been provisioned to the mobile device 102 via installation of the plug-in (block 432) and the mobile device 102 is now configured to conduct commercial transactions using the provisioned service.

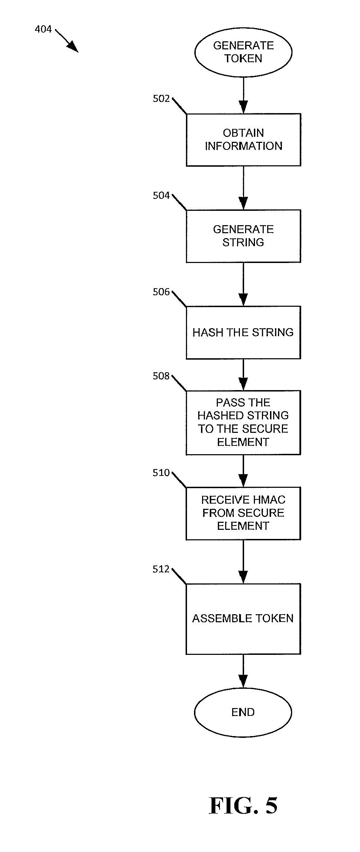

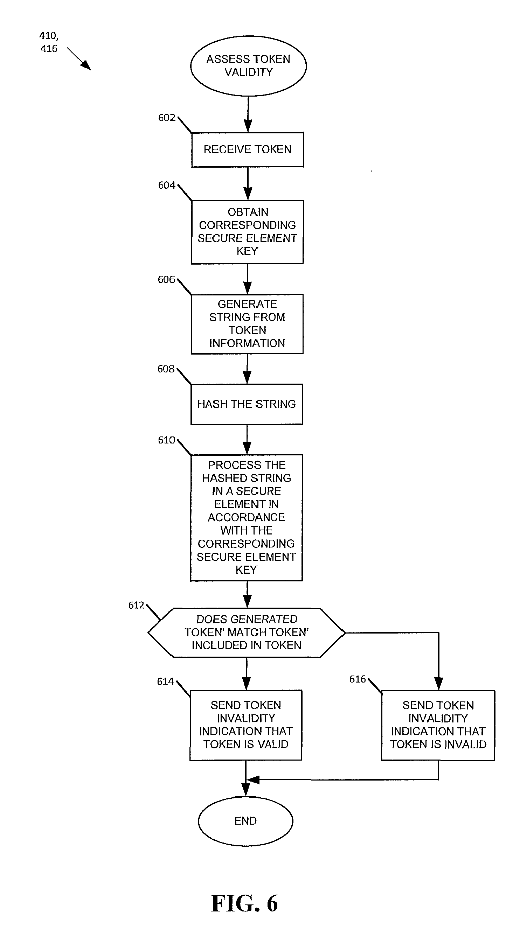

FIGS. 5 and 6 depict example flow diagrams representative of processes that may be implemented using, for example, computer-readable instructions stored on a computer-readable medium to provision payment services. The example processes of FIGS. 5 and 6 may be performed using one or more processors, controllers, and/or any other suitable processing devices. For example, the example process of FIG. 5 may be implemented using coded instructions (e.g., computer readable instructions) stored on one or more tangible computer readable media such as flash memory, read-only memory (ROM), and/or random-access memory (RAM), such as may be found in the mobile device 102 of FIG. 1. As an additional example, the example process of FIG. 6 may be implemented using coded instructions (e.g., computer readable instructions) stored on one or more tangible computer readable media such as flash memory, read-only memory (ROM), and/or random-access memory (RAM), such as may be found in the trusted service manager 106 of FIG. 1.

As used herein, the term tangible computer readable medium is expressly defined to include any type of computer readable storage and to exclude propagating signals. Additionally or alternatively, the example processes of FIGS. 5 and 6 may be implemented using coded instructions (e.g., computer-readable instructions or machine-accessible instructions) stored on one or more non-transitory computer readable media such as flash memory, read-only memory (ROM), random-access memory (RAM), cache, or any other storage media in which information is stored for any duration (e.g., for extended time periods, permanently, brief instances, for temporarily buffering, and/or for caching of the information).

As used herein, the term non-transitory computer-readable medium and non-transitory machine-accessible medium are expressly defined to include any type of computer-readable medium or machine-accessible medium.

Alternatively, some or all operations of the example processes of FIGS. 5 and 6 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, some or all operations of the example processes of FIGS. 5 and 6 may be implemented manually or as any combination(s) of any of the foregoing techniques, for example, any combination of firmware, software, discrete logic and/or hardware. Further, although the example processes of FIGS. 5 and 6 are described with reference to the flow diagrams of FIGS. 5 and 6, other methods of implementing the processes of FIGS. 5 and 6 may be employed. For example, the order of execution of the blocks may be changed, and/or some of the blocks described may be changed, eliminated, sub-divided, or combined. Additionally, any or all operations of the example processes of FIGS. 5 and 6 may be performed sequentially and/or in parallel by, for example, separate processing threads, processors, devices, discrete logic, circuits, etc.

FIG. 5 shows additional detail of the token generation process 404 of FIG. 4. The token generation process 404 may be carried out by the token generator 110 of FIG. 1 and FIG. 2. The token generation process 404 obtains information (block 502) relevant to the token generation. For example, the token generation process 404 may obtain a version number, an indication that the request is made from the mobile device, a device PIN, a timestamp, and a service ID. Of course, additional information may be obtained relevant to the generation of the token.

The token generation process 404 then generates the string that will be hashed (block 504). For example, the string may include the string described above in conjunction with FIG. 2. After the string is been generated (block 504), the string is hashed (block 506) using, for example, an SHA-512 hash function. The hashed string is then passed to the secure element (block 508), which cryptographically signs the hashed string and returns a hash-based message authentication code (HMAC) (block 510). In one example, the secure element constructs the HMAC by cryptographically signing the hashed string with a secure element key (e.g., a unique key) that was stored in the mobile device 102 by the trusted service manager 106 during manufacture of the mobile device 102. Alternatively, the secure element key may be provided to and/or stored in the mobile device 102 at any time during or prior to the provisioning of payment services at the mobile device 102. As described below in conjunction with FIG. 6, it is the knowledge of the secure element key, which is closely held information known to the trusted service manager 106, that allows the trusted service manager 106 to assess the validity of the token generated by the token generator 110.

The token generation process 404 assembles the token by combining information received from the secure element as well as information previously obtained (e.g., the information obtained at block 502) (block 512).

FIG. 6 shows additional detail of the token validity assessment process 410, 416 of FIG. 4. The token validity assessment process 410, 416 may be carried out by the token validator 120 of the trusted service manager 106 of FIG. 1 and FIG. 3. The token validity assessment process 410, 416 receives the token (block 602) and obtains a corresponding secure element key (block 604). In one example, the corresponding secure element key may be identified using one or more data structures within the trusted service manager 106, wherein such data structures link information in the token, such as device PIN, to a secure element ID.

To assess validity of the token, the process 410, 416 generates a string from token information. For example, the string may include the version, identification of the source as being the handheld, the PIN, timestamp, and service ID (block 606). The process 410, 416 hashes the string (block 608).

The process 410, 416 processes the hashed string is secure element in accordance with the corresponding secure element key (block 610). That is, the process 410, 416 attempts to duplicate the token' contained in the received token. The generated token' is compared with the token' in the received token (block 612) When the generated token' substantially matches the received token', the process 410, 416 sends a validity indication to communicate the result of the validity assessment (block 614). When the generated token' does not substantially match the received token', the process 410, 416 sends an invalidity indication to communicate the result of the validity assessment (block 616).

The process of FIG. 6 may be carried out at a server of a service provider, e.g., the service provider 104, or may be carried out at any other location and on any other device.

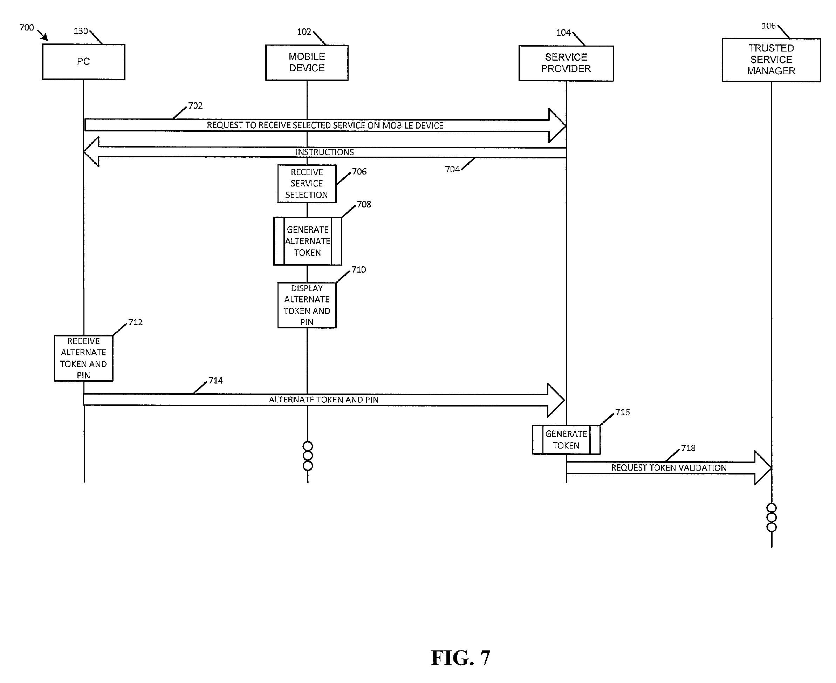

While the foregoing examples pertains to using a browser on the mobile device 102 to provision payment services to the mobile device 102, the PC 130 may also be utilized in the provisioning procedure. As shown in an example process 700 illustrated in FIG. 7, the PC 130 may make a request to the service provider 104 to receive a selected service (e.g., card) on the mobile device 102 (block 702). For example, a user at the PC 130 may select a particular payment service or card from a drop-down menu of a webpage hosted by the service provider 104. In response to the request, the service provider 104 may provide instructions for presentation on the PC 130 (block 704). For example, such instructions may include text or graphics informing the user of the PC 130 how to provision payment services to the mobile device 102 in particular, the instructions may inform the user to make a selection for a payment service on the mobile device 102 (block 706).

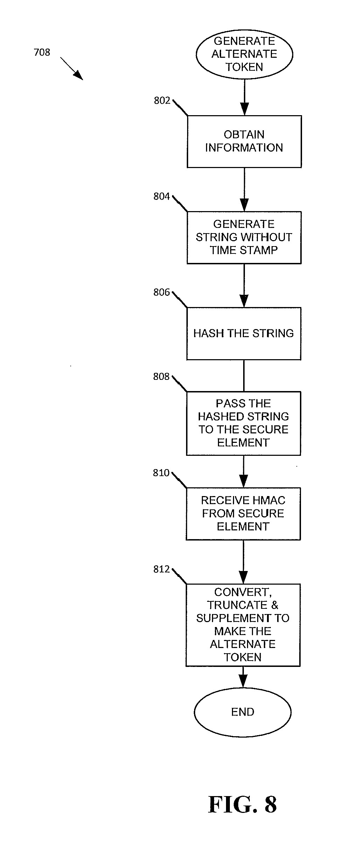

In response to the selection, the mobile device 102 may generate an alternate token (block 708). In one example, the alternate token may be generated as described below in conjunction with FIG. 8. The mobile device 102 may then display the alternate token and PIN on the display screen of the mobile device 102 (block 710). The user may then key the alternate token and PIN into the webpage hosted by the service provider 104 (block 712) using the PC 130. The alternate token and the PIN are then transferred from the PC 130 to the service provider 104 (block 714).

The service provider 104 may then generate a token from the alternate token and the PIN (block 716) and request token validation (block 718). After token validation is been requested, the mobile device 102, the service provider 104, and the trusted service manager 106 interact as described above in conjunction with FIG. 4. Accordingly further detail regarding this processing that was previously described will not be provided here.

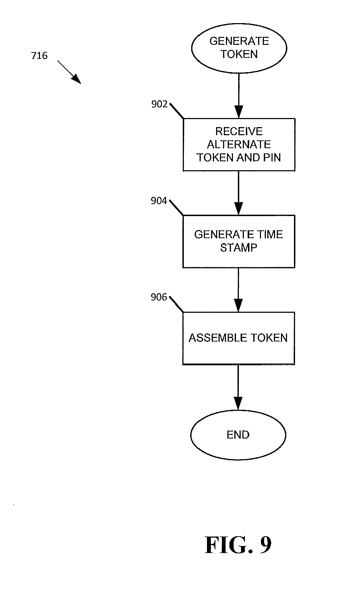

FIGS. 8 and 9 depict example flow diagrams representative of processes that may be implemented using, for example, computer-readable instructions stored on a computer-readable medium. The example processes of FIGS. 8 and 9 may be performed using one or more processors, controllers, and/or any other suitable processing devices. For example, the example process of FIG. 8 may be implemented using coded instructions (e.g., computer readable instructions) stored on one or more tangible computer readable media such as flash memory, read-only memory (ROM), and/or random-access memory (RAM), such as may be found in the mobile device 102 of FIG. 1. As an additional example, the example process of FIG. 9 may be implemented using coded instructions (e.g., computer readable instructions) stored on one or more tangible computer readable media such as flash memory, read-only memory (ROM), and/or random-access memory (RAM), such as may be found in the service provider 104 of FIG. 1.

As used herein, the term tangible computer readable medium is expressly defined to include any type of computer readable storage and to exclude propagating signals. Additionally or alternatively, the example processes of FIGS. 8 and 9 may be implemented using coded instructions (e.g., computer-readable instructions or machine-accessible instructions) stored on one or more non-transitory computer readable media such as flash memory, read-only memory (ROM), random-access memory (RAM), cache, or any other storage media in which information is stored for any duration (e.g., for extended time periods, permanently, brief instances, for temporarily buffering, and/or for caching of the information).

As used herein, the term non-transitory computer-readable medium and non-transitory machine-accessible medium are expressly defined to include any type of computer-readable medium or machine-accessible medium.

Alternatively, some or all operations of the example processes of FIGS. 8 and 9 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, some or all operations of the example processes of FIGS. 8 and 9 may be implemented manually or as any combination(s) of any of the foregoing techniques, for example, any combination of firmware, software, discrete logic and/or hardware. Further, although the example processes of FIGS. 8 and 9 are described with reference to the flow diagrams of FIGS. 8 and 9, other methods of implementing the processes of FIGS. 8 and 9 may be employed. For example, the order of execution of the blocks may be changed, and/or some of the blocks described may be changed, eliminated, sub-divided, or combined. Additionally, any or all operations of the example processes of FIGS. 8 and 9 may be performed sequentially and/or in parallel by, for example, separate processing threads, processors, devices, discrete logic, circuits, etc.

The alternate token generation process 708 obtains information used to generate the alternate token (block 802). The information may include a version number; an indication that the source of the request is the desktop, or PC 130; the PIN of the mobile device 102; and the service ID indicating the payment service to be provisioned. The process 708 generates a string without timestamp (block 804) and hashes the string (block 806).

The hashed string is passed to the secure element (block 808), which cryptographically signs the hashed string so that the process 708 receives the HMAC from the secure element (block 810). The results from the secure element are converted into a hexadecimal string, truncated to eight digits, and are appended with a check digit to construct the alternate token (block 812).

The generate token process 716, which is shown in FIG. 9, may be carried out by the service provider to generate a token from the alternate token and the PIN provided from the PC 130. The process 716 receives the alternate token and the PIN (block 902) and generates a timestamp (block 904). The token is been assembled by the service provider 104 (block 906). In one example, the token includes the following information: version=1; source=desktop; pin=<device PIN>; service=<serviceid>; timestamp=<UTC>; atoken=<alternate_token>. In this case, one the trusted service manager 106 carries out token validation, the trusted service manager 106 attempts to duplicate the alternate token using information provided in the token and secure element key corresponding to the mobile device 102.

As noted above, when a token's source is specified as being a handheld, the timestamp that was generated at the mobile device 102 is used as part of the cryptographic signature process. Thus, because the cryptographic signature authenticates the time at which the mobile device 102 generated the token, the trusted service manager 106 could potentially use the timestamp to disallow provisioning of the service, if the service provider 104 is requesting provisioning too long after the token creation. Conversely when the token's source is specified as being a desktop, the timestamp is generated by the service provider 104. The addition of the timestamp by the service provider 104 allows the trusted service manager 106 to conduct testing regarding the timing of the request made by the service provider 104.

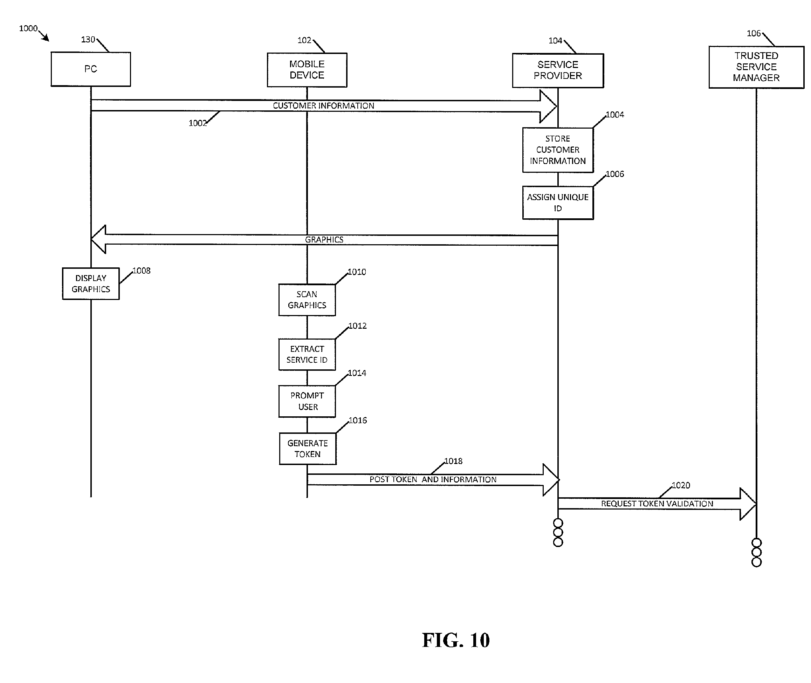

Referring now to FIG. 10, an example process 1000 includes communications and processing to provision payment services. A user at the PC 130 may provide customer information to the website hosted by the service provider 104 (block 1002). The service provider 104 may store the customer information (block 1004) and assigned a unique identification to that customer information (block 1006).

The service provider 104 may then embed the service ID and the unique ID into a graphic and provide the graphic to the PC 130, which will display the graphic to the user (block 1008). The graphic may be presented as a barcode, a two-dimensional code, a QR code, or any other suitable graphic. Alternatively, rather than the graphics being provided from the service provider 104 to the PC 130, the service provider may print the graphics on media, such as paper, and may mail the printed media to the user of the mobile device 102. As a further alternative, the service provider 104 may embed the service ID and the unique ID into an NFC device that is mailed to the user of the mobile device 102. In some implementations, the unique ID could be a cookie used for the current session during which the PC 130 provided information to the service provider 104.

Whether the graphics are displayed on the PC 130 or are received on media in the mail (e.g., as a QR code or an NFC device), the mobile device scans the graphics (or the NFC device) (block 1010). The scanning may be carried out using barcode scanner or QR code scanner software and the camera of the mobile device 102, or using NFC reader technology within the mobile device 102.

The mobile device 102 extracts the service ID from the graphic or NFC device and queries a card discovery service to obtain the service name corresponding to the service ID and a service POST uniform resource locator (URL) (1012). The mobile device 102 then prompts the user to confirm that the user wants to add the specified payment service to the virtual wallet 114 of the mobile device 102 (block 1014).

If the user desires to add the specified payment service to the virtual wallet 114 of the mobile device 102, the mobile device 102 generates a token, as described above, (block 1016) and posts information including, for example, service ID, unique ID, device PIN, and token to the POST URL (block 1018). The service provider 104 then requests the trusted service manager 106 to validate the token (block 1020). After token validation is been requested, the mobile device 102, the service provider 104, and the trusted service manager 106 operate as described above in conjunction with FIG. 4. Accordingly further detail regarding this processing that was previously described will not be provided here.

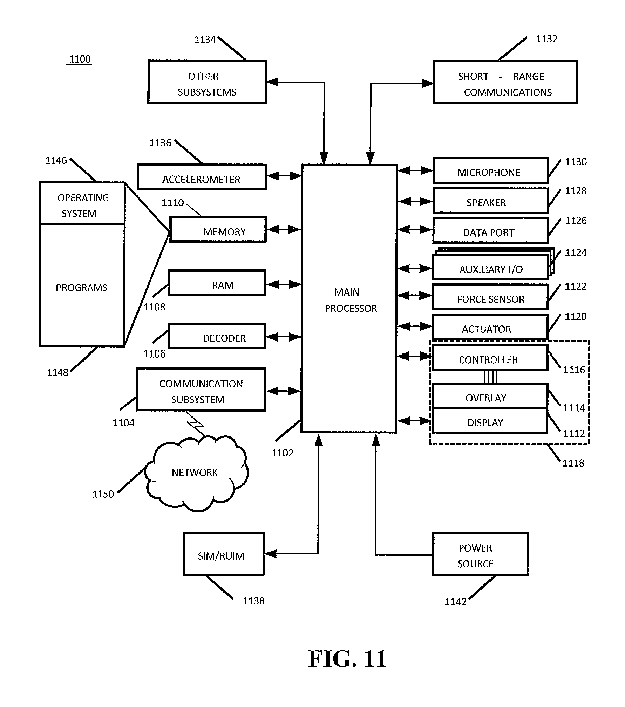

Further detail of certain aspects of the mobile devices 102, 104 of FIG. 1 are shown in FIG. 11 with respect to a mobile, or portable electronic, device 1100. The mobile device 1100 includes multiple components, such as a processor 1102 that controls the overall operation of the mobile device 1100. Communication functions, including data and voice communications, are performed through a communication subsystem 1104. Data received by the mobile device 1100 is decompressed and decrypted by a decoder 1106. The communication subsystem 1104 receives messages from and sends messages to a wireless network 1150. The wireless network 1150 may be any type of wireless network, including, but not limited to, data wireless networks, voice wireless networks, and networks that support both voice and data communications. A power source 1142, such as one or more rechargeable batteries or a port to an external power supply, powers the mobile device 1100.

The processor 1102 interacts with other components, such as Random Access Memory (RAM) 1108, memory 1110, a display 1112 with a touch-sensitive overlay 1114 operably coupled to an electronic controller 1116 that together comprise a touch-sensitive display 1118, one or more actuators 1120, one or more force sensors 1122, an auxiliary input/output (I/O) subsystem 1124, a data port 1126, a speaker 1128, a microphone 1130, short-range communications 1132, and other device subsystems 1134. In one example, the processor 1102 and the memory 1110 may cooperate to implement the functionality described in conjunction with the controllers 124 and 134 of FIG. 1. For example, tangible and/or non-transitory, and/or machine readable instructions may be stored by the processor 1102 and/or the memory 1110 to implement the functionality shown in FIGS. 5 and 8.

Input via a graphical user interface is provided via the touch-sensitive overlay 1114. The processor 1102 interacts with the touch-sensitive overlay 1114 via the electronic controller 1116. Information, such as text, characters, symbols, images, icons, and other items that may be displayed or rendered on a mobile device, is displayed on the touch-sensitive display 1118 via the processor 1102. The processor 1102 may interact with an accelerometer 1136 that may be utilized to detect direction of gravitational forces or gravity-induced reaction forces.

To identify a subscriber for network access, the mobile device 1100 may utilize a Subscriber Identity Module or a Removable User Identity Module (SIM/RUIM) card 1138 for communication with a network, such as the wireless network 1150. Alternatively, user identification information may be programmed into memory 1110.

The mobile device 1100 includes an operating system 1146 and software programs, applications, or components 1148 that are executed by the processor 1102 and are typically stored in a persistent, updatable store such as the memory 1110. Additional applications or programs may be loaded onto the mobile device 1100 through the wireless network 1150, the auxiliary I/O subsystem 1124, the data port 1126, the short-range communications subsystem 1132, or any other suitable subsystem 1134.

A received signal such as a text message, an e-mail message, or web page download is processed by the communication subsystem 1104 and input to the processor 1102. The processor 1102 processes the received signal for output to the display 1112 and/or to the auxiliary I/O subsystem 1124. A subscriber may generate data items, for example e-mail messages, which may be transmitted over the wireless network 1150 through the communication subsystem 1104. For voice communications, the overall operation of the mobile device 1100 is similar. The speaker 1128 outputs audible information converted from electrical signals, and the microphone 1130 converts' audible information into electrical signals for processing.

A capacitive touch-sensitive display includes a capacitive touch-sensitive overlay 1114. The overlay 1114 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

The actuator(s) 1120 may be depressed or activated by applying sufficient force to the touch-sensitive display 1118 to overcome the actuation force of the actuator 1120. The actuator(s) 1120 may be actuated by pressing anywhere on the touch-sensitive display 1118. The actuator(s) 1120 may provide input to the processor 1102 when actuated. Actuation of the actuator(s) 1120 may result in provision of tactile feedback. When force is applied, the touch-sensitive display 1118 is depressible, pivotable, and/or movable. Such a force may actuate the actuator(s) 1120. The touch-sensitive display 1118 may, for example, float with respect to the housing of the mobile device, i.e., the touch-sensitive display 1118 may not be fastened to the housing. A mechanical dome switch actuator may be utilized. In this example, tactile feedback is provided when the dome collapses due to imparted force and when the dome returns to the rest position after release of the switch. Alternatively, the actuator 1120 may comprise one or more piezoelectric (piezo) devices that provide tactile feedback for the touch-sensitive display 1118.

Optional force sensors 1122 may be disposed in conjunction with the touch-sensitive display 1118 to determine or react to forces applied to the touch-sensitive display 1118. The force sensor 1122 may be disposed in line with a piezo actuator 1120. The force sensors 1122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities.

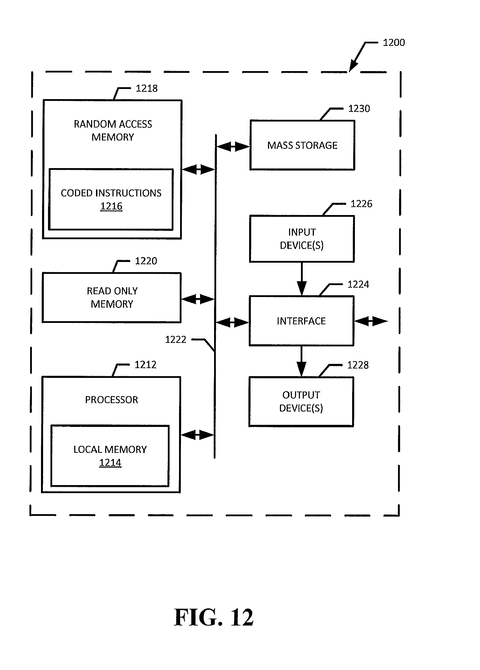

FIG. 12 is a block diagram of an example computer 1200 capable of implementing the apparatus and methods disclosed herein in conjunction with the service provider 104 and the trusted service manager 106. The computer 1200 can be, for example, a server, a personal computer, a personal digital assistant (PDA), an Internet appliance, a DVD player, a CD player, a digital video recorder, a personal video recorder, a set top box, or any other type of computing device.

The system 1200 of the instant example includes a processor 1212 such as a general purpose programmable processor. The processor 1212 includes a local memory 1214, and executes coded instructions 1216 present in the local memory 1214 and/or in another memory device. The processor 1212 may execute, among other things, the machine readable instructions represented in FIGS. 6 and 9. The processor 1212 may be any type of processing unit or other logic circuit.

The processor 1212 is in communication with a main memory including a volatile memory 1218 and a non-volatile memory 1220 via a bus 1222. The volatile memory 1218 may be implemented by Static Random Access Memory (SRAM), Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1220 may be implemented by flash memory and/or any other desired type of memory device. Access to the main memory 1218, 1220 is typically controlled by a memory controller (not shown) in a conventional manner.

The computer 1200 also includes a conventional interface circuit 1224. The interface circuit 1224 may be implemented by any type of well-known interface standard, such as an Ethernet interface, a universal serial bus (USB), and/or a third generation input/output (3GIO) interface.

One or more input devices 1226 are connected to the interface circuit 1224. The input device(s) 1226 permit a user to enter data and commands into the processor 1212. The input device(s) can be implemented by, for example, a keyboard, a mouse, a touchscreen, a track-pad, a trackball, an isopoint and/or a voice recognition system.

One or more output devices 1228 are also connected to the interface circuit 1224. The output devices 1228 can be implemented, for example, by display devices (e.g., a liquid crystal display, a cathode ray tube display (CRT)), by a printer and/or by speakers. The interface circuit 1224, thus, typically includes a graphics driver card.

The interface circuit 1224 also includes a communication device such as a modem or network interface card to facilitate exchange of data with external computers via a network (e.g., an Ethernet connection, a digital subscriber line (DSL), a telephone line, coaxial cable, a cellular telephone system, etc.).

The computer 1200 also includes one or more mass storage devices 1230 for storing software and data. Examples of such mass storage devices 1230 include floppy disk drives, hard drive disks, compact disk drives and digital versatile disk (DVD) drives.

As an alternative to implementing the methods and/or apparatus described herein in a system such as the device of FIG. 12, the methods and or apparatus described herein may be embedded in a structure such as a processor and/or an ASIC (application specific integrated circuit).

Although certain methods, apparatus, and articles of manufacture have been described herein, the scope of coverage of this patent is not limited thereto. To the contrary, this patent covers all methods, apparatus, and articles of manufacture fairly falling within the scope of the appended claims either literally or under the doctrine of equivalents.

## Claims

1. A method comprising:
receiving (402) an indication of a service to be provisioned to a mobile device (102);
generating (404) a token indicative of the service, wherein the token includes a cryptographically signed portion that was cryptographically signed by a secure element (112) of the mobile device (102);
sending (406) the token to an entity (104, 106) for verification; and
provisioning (432) the service when the token is verified.

2. The method of claim 1, wherein the service is a payment service.

3. The method of any one of the preceding claims, wherein the token includes information used to construct the cryptographically signed portion.

4. The method of any one of the preceding claims, wherein token includes at least one of an identification of the service to be provisioned to the mobile device (102), a mobile device identifier, or a timestamp.

5. The method of any one of the preceding claims, wherein generating (404) the token comprises constructing the cryptographically signed portion using a unique key assigned to the mobile device (102).

6. The method of claim 5, wherein the unique key is assigned to the mobile device (102) by a trusted service manager (106).

7. The method of claim 6, wherein the verification is performed by the trusted service manager (106).

8. The method of any one of the preceding claims, wherein receiving (402) the indication comprises obtaining (1010) a scan of an image.

9. The method of claim 8, wherein the image is obtained from at least one of a scan of a display screen or a scan of printed media.

10. A device (102), comprising:
a processor (1102);
a secure element (112); and
a memory (1110) coupled to the processor (1102) and storing instructions which, when executed by the processor (1102), cause the processor (1102) to:
generate (404) a token indicative of a service to be provisioned to a mobile device (102), wherein the token includes a cryptographically signed portion that was cryptographically signed by the secure element (112);
send (406) the token to an entity (104, 106) for verification; and
provision (432) the service when the token is verified.

11. The device of claim 10, wherein the secure element (112) is to store a secure element key and to construct the cryptographically signed portion using the secure element key.

12. The device of claim 10 or 11, wherein the secure element (112) is to receive the secure element key prior to generating (404) the token.

13. The device of any one of claims 10, 11, or 12, further comprising a virtual wallet (114) to store a plug-in (116, 118) corresponding to the service.

14. The device of any one of claims 10, 11, or 12, wherein the secure element (112) is to construct the cryptographically signed position using at least one of an identification of the service to be provisioned to the mobile device (102), a mobile device identifier, or a timestamp.

15. A computer readable storage medium (1108, 1110) storing instructions which, when executed by a processor (1102), cause the processor (1102) to implement the method or instructions of any of the preceding claims.
